# EUROPÄISCHE PATENTSCHRIFT

(11) **EP 1 339 969 B1**
(45) Veröffentlichungstag und Bekanntmachung des Hinweises auf die Patenterteilung: **09.11.2005**
(21) Anmeldenummer: 01971627.3
(22) Anmeldetag: 21.08.2001
(51) Int. Cl.: F02M 59/46, F02M 47/02

(54) **MAGNETVENTIL ZUR STEUERUNG EINES EINSPRITZVENTILS EINER BRENNKRAFTMASCHINE**
MAGNETIC VALVE FOR CONTROLLING AN INJECTION VALVE OF AN INTERNAL COMBUSTION ENGINE
ELECTROVANNE DESTINEE A LA COMMANDE D'UN INJECTEUR D'UN MOTEUR A COMBUSTION INTERNE

(30) Priorität: 18.10.2000 DE 10051549
(43) Veröffentlichungstag der Anmeldung: 03.09.2003
(73) Patentinhaber: ROBERT BOSCH GMBH, 70442 Stuttgart (DE)
(72) Erfinder: KUEHNE, Wolfgang, 70619 Stuttgart (DE); HAEBERER, Rainer, 75015 Bretten (DE); HORN, Matthias, 71691 Freiberg (DE); ULMSCHNEIDER, Christoph, 78549 Spaichingen (DE); RETTICH, Andreas, 71083 Herrenberg (DE)
(86) Internationale Anmeldenummer: PCT/DE2001/003192
(87) Internationale Veröffentlichungsnummer: WO 2002/033246

(56) Entgegenhaltungen:
- EP-A- 0 851 114
- EP-A- 0 890 731
- DE-A- 19 650 865
- US-A- 6 131 829

## Beschreibung

Die Erfindung betrifft ein Magnetventil zur Steuerung eines Einspritzventils einer Brennkraftmaschine.

Aus der DE 196 50 865 A1 ist ein Magnetventil bekannt, das zur Steuerung des Kraftstoffdrucks im Steuerdruckraum eines Einspritzventils, beispielsweise eines Injektors einer Common-Rail-Einspritzanlage verwandt wird, wobei der Kraftstoffdruck im Steuerdruckraum wiederum die Bewegung eines Ventilgliedes steuert, mittels dem eine Einspritzöffnung des Einspritzventils geöffnet oder geschlossen werden kann. Das bekannte Magnetventil weist einen in einem Gehäuseteil angeordneten Elektromagneten mit Spule und Magnetkern, einen beweglichen Anker und ein mit dem Anker bewegtes und von einer Schließfeder in Schließrichtung beaufschlagtes Steuerventilglied auf, das mit einem Ventilsitz des Magnetventils zusammenwirkt und so den Kraftstoffabfluß aus dem Steuerdruckraum steuert. Bei dem aus der DE 196 50 865 A1 bekannten Magnetventil ist der Anker zweiteilig mit einem Ankerbolzen und einer auf dem Ankerbolzen gleitverschiebbar gelagerten Ankerplatte ausgeführt. Darüber hinaus sind aber auch Magnetventile zur Steuerung von Einspritzventilen bekannt, bei denen der Ankerbolzen fest mit der Ankerplatte verbunden ist.

Ein Nachteil der bekannten Magnetventile besteht im sogenannten Ankerprellen. Beim Abschalten des Magneten wird das an dem Anker festgelegte Steuerventilglied von der Schließfeder ruckartig zum Ventilsitz hin beschleunigt, um einen Kraftstoffablaufkanal aus dem Steuerdruckraum zu verschließen. Der Aufprall des Steuerventilgliedes am Ventilsitz kann ein nachteiliges Schwingen und/oder Prellen des Steuerventilgliedes zur Folge haben, wodurch der Einspritzvorgang beeinträchtigt wird. Bei dem aus der DE 196 50 865 A1 bekannten Magnetventil mit zweiteiligem Anker wird das Prellen dadurch vermindert, daß die Ankerplatte auf dem Ankerbolzen verschiebbar ist und sich beim Aufprall des Steuerventilgliedes am Ventilsitz gegen die Spannkraft einer Rückholfeder weiterbewegt. Dadurch wird die effektiv abgebremste Masse geringer. Jedoch muß nun ein nachteiliges Nachschwingen der Ankerplatte am Ankerbolzen vermieden werden. Dies wird durch einen hydraulischen Dämpfungsraum erreicht, der zwischen einer an der Ankerplatte festgelegten Gleithülse und einem ortsfest an dem Gehäuseteil des Magnetventils angeordneten Gleitstück ausgebildet ist und ein Nachschwingen der Ankerplatte dämpft. Bei einer sehr starken Auslenkung der Ankerplatte in Schließrichtung des Steuerventilgliedes schlägt die Ankerplatte an dem ortsfest in dem Gehäuseteil angeordneten Gleitstück an. Ein eventuell vorhandener Restimpuls wird dabei auf das ortsfeste Gleitstück und von da auf das Gehäuseteil übertragen.

Durch die EP 0 851 114 A2 ist des weiteren ein Magnetventil bekannt, bei dem, über die Merkmale des durch die DE 196 50 865 A1 beschriebenen Magnetventils hinaus, an dem Ankerbolzen ein zweiter Anschlag angeordnet ist. Spätestens in der Schließstellung, mit dem Anschlagen des Steuerventilgliedes am Ventilsitz, ergibt sich eine, entgegen der Spannkraft der Rückholfeder gerichtete Verschiebung des gleitend verschiebbaren Teils auf dem Ankerbolzen. Diese; durch die Trägheit seiner Masse resultierende Verschiebung des gleitend verschiebbaren Teils, führt zu dessen Anschlagens an dem zweiten Anschlag.

Aufgabe der Erfindung ist es, das Anschlagen es gleitend verschiebbaren Teils an dem zweiten Anschlag so einzurichten, dass ein Nachschwingen und/oder Abprellen des Steuerventilgliedes vom Ventilsitz weitgehend vermieden wird. Diese Aufgabe wird erfindungsgemäß durch den Gegenstand des Patentanspruchs 1 gelöst.

Bei dem erfindungsgemäßen Magnetventil mit den Merkmalen des Anspruchs 1 ist ein auf dem Ankerbolzen gleitend verschiebbares Teil angeordnet, daß sich zwischen zwei Anschlägen verschieben kann, die beide an dein Ankerbolzen fest angeordnet sind. Beim Aufprall des Steuerventilgliedes auf den Ventilsitz bewegt sich das gleitend verschiebbare Teil, ähnlich wie die Ankerplatte bei dem im Stand der Technik bekannten Magnetventil entgegen der Spannkraft der Rückholfeder in Schließrichtung des Steuerventilgliedes. Die Masse des gleitend verschiebbaren Teils und die Spannkraft der Rückholfeder sind so ausgelegt, daß das gleitend verschiebbare Teil gegen den zweiten Anschlag des Ankerbolzen anstößt. Da dieser zweite Anschlag nicht gehäusefest angeordnet ist, sondern mit dem Anker bewegt wird und an diesem festgelegt ist, wird durch den Impulsübertrag des gleitend verschiebbaren Teils auf den Ankerbolzen, ein Abprellen des Ankers vom Ventilsitz vermindert. Dies ist möglich, da der Impuls des am Ventilsitz abprallenden Ankers und der Impuls des nacheilenden, an dem Ankerbolzen verschiebbaren Teils entgegengesetzt gerichtet und in etwa gleich groß sind. Vorteilhaft ist die Erfindung auch bei solchen Magnetventilen einsetzbar, bei denen die Ankerplatte einstückig mit dem Ankerbolzen ausgebildet ist, ein Nachschwingen der Ankerplatte also nicht möglich ist. Durch die Verringerung des Prellens und des Nachschwingens des Steuerventilgliedes am Ventilsitz können vorteilhaft kürzere Abstände zwischen Voreinspritzung und Haupteinspritzung eingestellt werden, da der Anker weniger Zeit benötigt, um eine definierte Ruhelage einzunehmen.

Vorteilhafte Ausführungsbeispiele und Weiterbildungen der Erfindung werden durch die in den abhängigen Ansprüchen enthaltenen Merkmale ermöglicht.

Der zweite an dem Ankerbolzen ausgebildete Anschlag kann vorteilhaft durch eine dem gleitend verschiebbaren Teil zugewandte, ringförmige Fläche einer auf den Ankerbolzen geschobenen und mit dem Ankerbolzen fest verbundenen hohlzylinderförmigen Hülse gebildet werden. Bei der Montage wird zunächst das verschiebbare Teil auf den Ankerbolzen aufgeschoben und anschließend die Hülse.

Der erste dem zweiten Anschlag gegenüberliegende Anschlag für das verschiebbare Teil kann in einfacher Weise durch eine Ringschulter gebildet werden, die zwischen der Ankerplatte und dem zweiten Anschlag an dem Ankerbolzen ausgebildet ist.

Vorteilhaft umfaßt das gleitend verschiebbare Teil einen auf den Ankerbolzen aufgeschobenen hülsenförmigen Grundkörper, der an seinem dem ersten Anschlag zugewandten Ende einen Flansch aufweist, an dem sich die Rückholfeder abstützt.

Die Erfindung kann bei Magnetventilen eingesetzt werden, welche einen einteiligen Anker mit einer an dem Ankerbolzen festgelegten Ankerplatte oder einen zweiteiligen Anker mit einer relativ zum Ankerbolzen verschiebbaren Ankerplatte verwenden. Im letzteren Fall ist dann die Ankerplatte als das gleitend verschiebbare Teil vorgesehen, welches in der Schließstellung des Magnetventils gegen den zweiten Anschlag des Ankerbolzens anstößt.

### Zeichnungen

Ausführungsbeispiele der Erfindung sind in den Zeichnungen dargestellt und werden in der nachfolgenden Beschreibung erläutert. Es zeigt

### Beschreibung eines Ausführungsbeispiels

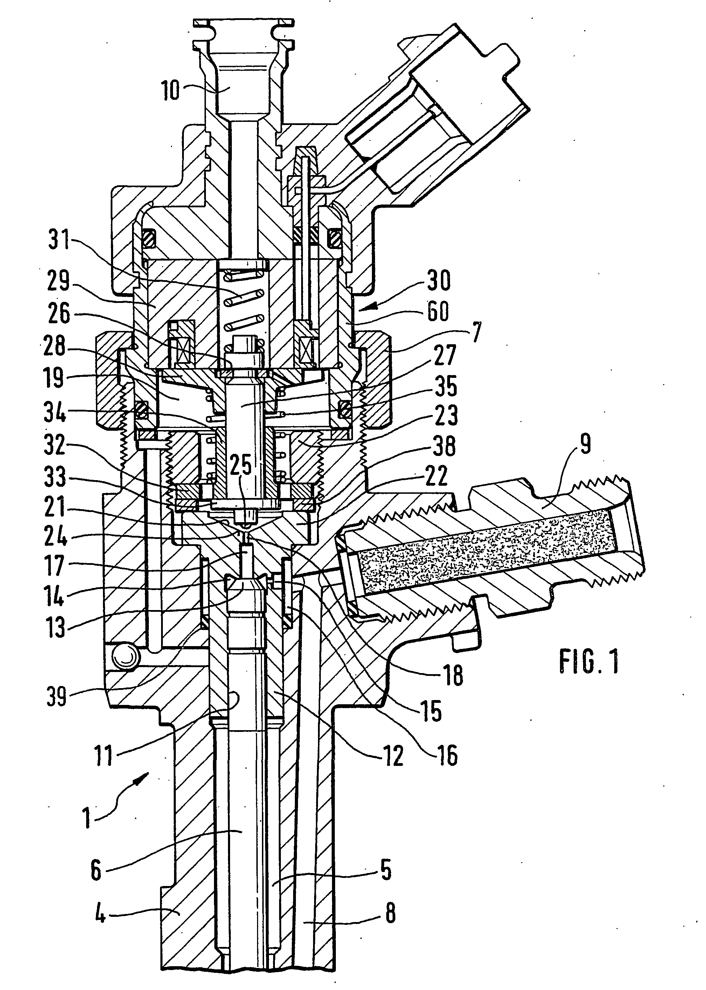

Fig. 1 zeigt den oberen Teil eines im Stand der Technik bekannten Kraftstoffeinspritzventils 1, welches zur Verwendung in einer Kraftstoffeinspritzanlage bestimmt ist, die mit einem Kraftstoffhochdruckspeicher ausgerüstet ist, der durch eine Hochdruckförderpumpe kontinuierlich mit Hochdruckkraftstoff versorgt wird. Das dargestellte Kraftstoffeinspritzventil 1 weist ein Ventilgehäuse 4 mit einer Längsbohrung 5 auf, in der ein Ventilkolben 6 angeordnet ist, der mit seinem einen Ende auf eine in einem nicht dargestellten Düsenkörper angeordnete Ventilnadel einwirkt. Die Ventilnadel ist in einem Druckraum angeordnet, der über eine Druckbohrung 8 mit unter Hochdruck stehendem Kraftstoff versorgt ist. Bei einer Öffnungshubbewegung des Ventilkolbens 6 wird die Ventilnadel durch den ständig an einer Druckschulter der Ventilnadel angreifenden Kraftstoffhochdruck im Druckraum entgegen der Schließkraft einer Feder angehoben. Durch eine dann mit dem Druckraum verbundene Einspritzöffnung erfolgt die Einspritzung des Kraftstoffs in den Brennraum der Brennkraftmaschine. Durch Absenken des Ventilkolbens 6 wird die Ventilnadel in Schließrichtung in den Ventilsitz des Einspritzventils gedrückt und der Einspritzvorgang beendet.

Wie in Fig. 1 zu erkennen ist, wird der Ventilkolben 6 an seinem von der Ventilnadel abgewandten Ende in einer Zylinderbohrung 11 geführt, die in einem Ventilstück 12 eingebracht ist, welches in das Ventilgehäuse 4 eingesetzt ist. In der Zylinderbohrung 11 schließt die Stirnseite 13 des Ventilkolbens 6 einen Steuerdruckraum 14 ein, der über einen Zulaufkanal mit einem Kraftstoffhochdruckanschluß verbunden ist. Der Zulaufkanal ist im wesentlichen dreiteilig ausgebildet. Eine radial durch die Wand des Ventilstücks 12 führende Bohrung, deren Innenwände auf einem Teil ihrer Länge eine Zulaufdrossel 15 ausbilden, ist mit einem das Ventilstück umfangsseitig umgebenden Ringraum 16 ständig verbunden, welcher Ringraum wiederum über einen in den Zulaufkanal eingeschobenen Kraftstoffilter in ständiger Verbindung mit dem Kraftstoffhochdruckanschluß eines in das Ventilgehäuse 4 einschraubbaren Anschlußstutzens 9 steht. Der Ringraum 16 ist über einen Dichtring 39 zur Längsbohrung 5 abgedichtet. Über die Zulaufdrossel 15 ist der Steuerdruckraum 14 dem im Kraftstoffhochdruckspeicher herrschenden hohen Kraftstoffdruck ausgesetzt. Koaxial zum Ventilkolben 6 zweigt aus dem Steuerdruckraum 14 eine im Ventilstück 12 verlaufende Bohrung ab, die einen mit einer Ablaufdrossel 18 versehenen Kraftstoffablaufkanal 17 bildet, der in einen Entlastungsraum 19 einmündet, der mit einem Kraftstoffniederdruckanschluß 10 verbunden ist, welcher wiederum in nicht weiter dargestellter Weise mit einem Kraftstoffrücklauf des Einspritzventils 1 verbunden ist. Der Austritt des Kraftstoffablaufkanals 17 aus dem Ventilstück 12 erfolgt im Bereich eines kegelförmig angesenkten Teiles 21 der außenliegenden Stirnseite des Ventilstückes 12. Das Ventilstück 12 ist dabei in einem Flanschbereich 22 fest über ein Schraubglied 23 mit dem Ventilgehäuse 4 verspannt.

In dem kegelförmigen Teil 21 ist ein Ventilsitz 24 ausgebildet, mit dem ein Steuerventilglied 25 eines das Einspritzventil steuernden Magnetventils 30 zusammen wirkt. Das Steuerventilglied 25 ist mit einem zweiteiligen Anker in Form eines Ankerbolzens 27 und einer Ankerplatte 28 gekoppelt, welcher Anker mit einem Elektromagneten 29 des Magnetventils 30 zusammen wirkt. Das Magnetventil 30 umfaßt weiterhin ein den Elektromagneten bergendes Gehäuseteil 60, das mit dem Ventilgehäuse 4 über schraubbare Verbindungsmittel 7 fest verbunden ist. Bei dem bekannten Magnetventil ist die Ankerplatte 28 unter Einwirkung ihrer trägen Masse gegen die Vorspannkraft einer Rückholfeder 35 dynamisch verschiebbar auf dem Ankerbolzen 27 gelagert und wird durch diese Rückholfeder im Ruhezustand gegen einen am Ankerbolzen festgelegten Anschlagring 26 gedrückt. Mit ihrem anderen Ende stützt sich die Rückholfeder 35 gehäusefest an einem Flansch 32 eines den Ankerbolzen 27 führenden Gleitstücks 34 ab, das mit diesem Flansch zwischen einer auf das Ventilstück 12 aufgelegten Distanzscheibe 38 und dem Schraubglied 23 im Ventilgehäuse fest eingespannt ist. Der Ankerbolzen 27 und mit ihm die Ankerscheibe 28 und das mit dem Ankerbolzen verbundene Steuerventilglied 25 sind ständig durch eine sich gehäusefest abstützende Schließfeder 31 in Schließrichtung beaufschlagt, so daß das Steuerventilglied 25 normalerweise in Schließstellung am Ventilsitz 24 anliegt. Bei Erregung des Elektromagneten wird die Ankerplatte 28 vom Elektromagneten angezogen und dabei der Ablaufkanal 17 zum Entlastungsraum 19 hin geöffnet. Zwischen dem Steuerventilglied 25 und der Ankerplatte 28 befindet sich eine Ringschulter 33 am Ankerbolzen 27, die bei erregtem Elektromagneten am Flansch 32 anschlägt und so den Öffnungshub des Steuerventilglieds 25 begrenzt. Zur Einstellung des Öffnungshubes zwischen Flansch 32 und Ventilstück 12 dient die Distanzscheibe 38.

Das Öffnen und Schließen des Einspritzventils wird wie nachfolgend beschrieben von dem Magnetventil gesteuert. Der Ankerbolzen 27 wird ständig durch die Schließfeder 31 in Schließrichtung beaufschlagt, so daß das Steuerventilglied 25 in Schließstellung am Ventilsitz 24 anliegt und der Steuerdruckraum 14 zur Entlastungsseite 19 hin verschlossen ist, so daß sich dort über den Zulaufkanal sehr schnell der hohe Druck aufbaut, der auch in dem Kraftstoffhochdruckspeicher ansteht. Über die Fläche der Stirnseite 13 erzeugt der Druck im Steuerdruckraum 14 eine Schließkraft auf den Ventilkolben 6 und die damit in Verbindung stehende Ventilnadel, die größer ist als die andererseits in Öffnungsrichtung in Folge des anstehenden Hochdrucks wirkenden Kräfte. Wird der Steuerdruckraum 14 durch Öffnen des Magnetventils zur Entlastungsseite 19 hin geöffnet, baut sich der Druck in dem geringen Volumen des Steuerdruckraumes 14 sehr schnell ab, da dieser über die Zulaufdrossel 15 von der Hochdruckseite abgekoppelt ist. Infolgedessen überwiegt die auf die Ventilnadel in Öffnungsrichtung wirkende Kraft aus dem an der Ventilnadel anstehenden Kraftstoffhochdruck, so daß diese nach oben bewegt und dabei die wenigstens eine Einspritzöffnung zur Einspritzung geöffnet wird. Schließt jedoch das Magnetventil 30 den Kraftstoffablaufkanal 17, kann der Druck im Steuerdruckraum 14 durch den über den Zulaufkanal 15 nachfließenden Kraftstoff wieder aufgebaut werden, so daß die ursprüngliche Schließkraft ansteht und die Ventilnadel des Kraftstoffeinspritzventils schließt.

Beim Schließen des Magnetventils drückt die Schließfeder 31 den Ankerbolzen 27 mit dem Steuerventilglied 25 schlagartig gegen den Ventilsitz 24. Ein nachteiliges Abprellen oder Nachschwingen des Steuerventilgliedes entsteht dadurch, daß der Aufschlag des Ankerbolzen am Ventilsitz eine elastische Verformung desselben bewirkt. Die elastische Verformung wirkt als Energiespeicher, wobei ein Teil der Energie wiederum auf das Steuerventilglied übertragen wird, das dann zusammen mit dem Ankerbolzen vom Ventilsitz 24 abprellt. Das in Fig. 1 gezeigte bekannte Magnetventil verwendet daher einen zweiteiligen Anker mit einer vom Ankerbolzen 27 abgekoppelten Ankerplatte 28. Auf diese Weise läßt sich zwar die insgesamt auf den Ventilsitz auftreffende Masse verringern, jedoch muß ein nachteiliges Nachschwingen der Ankerplatte durch eine hydraulische Dämpfungsvorrichtung zwischen der Ankerplatte 28 und dem Gleitstück 34 verringert werden.

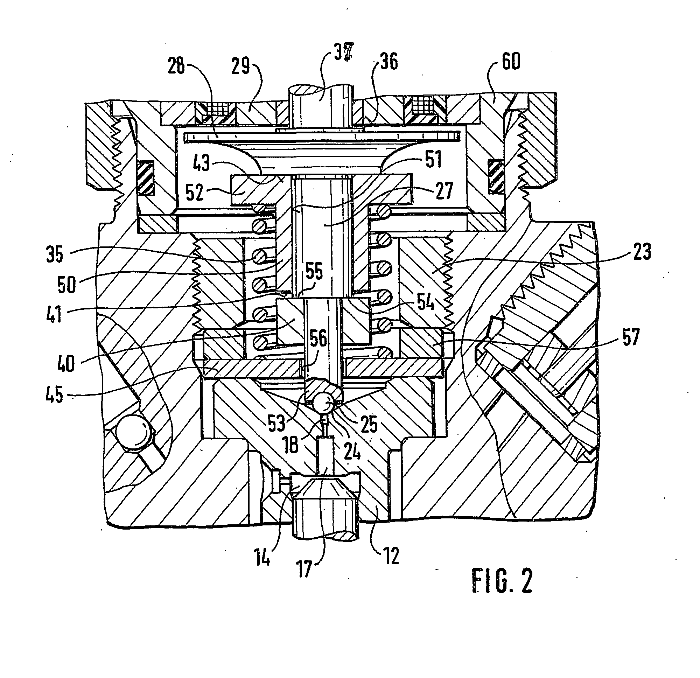

In Fig. 2 ist ein Ausführungsbeispiel des erfindungsgemäßen Magnetventils dargestellt. Gleiche Teile sind mit gleichen Bezugszeichen versehen. Das in Fig. 2 dargestellte Magnetventil weist einen einteiligen Anker auf, beim dem die Ankerplatte 28 einstückig mit dem Ankerbolzen 27 ausgebildet ist. Ein von der Ankerplatte 28 abstehender Führungszapfen 37 ist in einer Ausnehmung des Elektromagneten 29 gleitverschiebbar geführt. Ein an der Ankerplatte ausgebildeter Vorsprung 36 gewährleistet bei Anlage an dem Elektromagneten 29 einen Mindestabstand zwischen dem Elektromagneten und der Ankerplatte 28. Weiterhin ist ein zusätzliches Teil 50 vorgesehen, das einen hülsenförmigen Grundkörper aus Metall umfaßt, an dessen einem Ende ein Flansch 52 ausgebildet ist. Das Teil 50 ist gleitend verschiebbar auf dem Ankerbolzen 27 des Ankers angeordnet, wobei die Bewegung des gleitend verschiebbaren Teils 50 auf dem Ankerbolzen 27 durch einen ersten Anschlag 43 und einen zweiten Anschlag 41 begrenzt wird. Der Innendurchmesser einer in dem gleitend verschiebbaren Teil ausgebildeten Öffnung 51 ist dabei etwas größer ausgebildet als der Außendurchmesser des mittleren Abschnitts 55 des Ankerbolzens 27. Der erste Anschlag 43 ist durch eine Ringschulter oder Stufe des Ankerbolzen 27 ausgebildet. Der zweite Anschlag 41 wird durch ein ringförmiges Flächenstück einer auf den Ankerbolzen geschobenen hohlzylinderförmigen Hülse 40 aus Metall gebildet. Der dem Ventilsitz 24 zugewandte Endabschnitt 53 des Ankerbolzens 27 weist einen kleineren Durchmesser auf als der das gleitend verschiebbare Teil 50 tragende mittlere Abschnitt 55 des Ankerbolzens 27, so daß die beiden Abschnitte eine Stufe 54 bilden. Bei der Herstellung des Ankers wird zunächst das gleitend verschiebbare Teil 50 auf den mittleren Abschnitt 52 des Ankerbolzens aufgeschoben und anschließend die Hülse 40 auf den Endabschnitt 53. Beim Aufschieben der Hülse 40 gelangt diese an der Stufe 54 zur Anlage und wird in dieser Position am Ankerbolzen befestigt, was beispielsweise durch Schweißen, Verstemmen oder in anderer geeigneter Weise geschehen kann. Wie weiterhin in Fig. 2 zu erkennen ist, ist eine mit einer Öffnung 56 versehene Führungsscheibe 45 vorgesehen. Die Führungsscheibe 45 und ein Distanzstück 57 sind zwischen einem Schraubglied 23 und dem Ventilstück 12 im Ventilgehäuse eingespannt. Der mit dem Steuerventilglied 25 versehene Endabschnitt 53 des Ankerbolzens 27 ist in der Öffnung 56 der Führungsscheibe 45 gleitverschiebbar gelagert. Eine Rückholfeder 35 stützt sich mit ihrem einen Ende an dem Flansch 52 des gleitend verschiebbaren Teils 50 und mir ihrem anderen Ende gehäusefest an der Führungsscheibe 45 ab.

In einer Stellung, in welcher der Anker am Elektromagneten 29 anliegt, drückt die Rückholfeder 35 das gleitend verschiebbare Teil 50 mit dem Flansch 52 gegen den ersten Anschlag 43. Bei Abschaltung des Elektromagneten wird der Anker mit Ankerplatte und Ankerbolzen von der Schließfeder 31 zum Ventilsitz 24 hin beschleunigt. Dabei wirkt die größere Spannkraft der Schließfeder 31 der kleineren Spannkraft der Rückholfeder 35 entgegen. Sobald das Steuerventilglied 25 auf den Ventilsitz auftrifft, bewegt sich das gleitend verschiebbare Teil 50 aufgrund seiner Massenträgheit in Schließrichtung weiter, die zusätzliche Masse des Teils 50 vergrößert also nicht die von dem Ventilsitz abzubremsende Gesamtmasse. Das gleitend verschiebbare Teil 50 bewegt sich dabei auf dem Ankerbolzen 27 entgegen der Spannkraft der Rückholfeder 35. Kurz nach dem Augenblick, in welchem der Ankerbolzen 27 auf den Ventilsitz 24 auftrifft, stößt das nacheilende gleitend verschiebbare Teil 50 an den Anschlag 41 des Ankerbolzens 27. Dabei wird der Impuls des gleitend verschiebbaren Teils 50 auf den Ankerbolzen übertragen, so daß der in die entgegengesetzte Richtung gerichtete Impuls des abprellenden Ankers durch den Impulsübertrag vermindert wird. Vorteilhafter Weise ist die Masse des gleitend verschiebbaren Teils so ausgelegt, daß beide Impulse den gleichen Betrag haben. Durch das gleitend verschiebbare Teil 50 kann erreicht werden, daß die Prellbewegung des Ankers verhindert oder zumindest abgeschwächt wird und das Magnetventil zuverlässiger geschlossen wird. Das Teil 50 wirkt also aktiv einem Prellen und/oder Nachschwingen des Ankers entgegen. Vorteilhaft verringert sich hierdurch die Zeit, die benötigt wird, um das Steuerventilglied 25 in eine definierte Ruhelage am Ventilsitz zu befördern, wodurch ein geringerer Abstand zwischen Voreinspritzung und Haupteinspritzung möglich wird. Anschließend wird das gleitend verschiebbare Teil 50 durch die Rückholfeder 35 wieder in seine Ausgangslage an dem ersten Anschlag 43 zurückgeschoben.

Abweichend von dem hier dargestellten Ausführungsbeispiel kann der Anker auch zweiteilig ausgeführt werden, mit einer Ankerplatte, welche auf dem Ankerbolzen gleitend verschiebbar gelagert ist. In diesem Fall ist die Ankerplatte als das gleitend verschiebbare Teil anzusehen, welches durch seinen Aufprall an dem zweiten Anschlag des Ankerbolzens seine kinetische Energie auf den Ankerbolzen überträgt und so ein Prellen des Ankers aktiv verhindert.

## Patentansprüche

1. Magnetventil zur Steuerung eines Einspritzventils einer Brennkraftmaschine, welches Magnetventil ein Gehäuseteil (60), einen Elektromagneten (29), einen beweglichen Anker mit Ankerplatte (28) und Ankerbolzen (27), ein mit dem Anker bewegtes, von einer Schließfeder (31) in Schließrichtung beaufschlagtes, mit einem Ventilsitz (24) zusammenwirkendes Steuerventilglied (25) zum Öffnen und Schließen eines Kraftstoffablaufkanals (17) eines Steuerdruckraums (14) des Einspritzventils (1) und ein unter Einwirkung seiner trägen Masse in Schließrichtung des Steuerventilgliedes (25) entgegen der Spannkraft einer Rückholfeder (35) auf dem Ankerbolzen (27) gleitend verschiebbares Teil (28,50) aufweist, wobei die Rückholfeder (35) mit einem ersten Ende ortsfest an dem Gehäuseteil (60) angeordnet ist und mit dem anderen Ende das gleitend verschiebbare Teil (50) entgegen der Schließrichtung des Steuerventilgliedes (25) an einen an dem Ankerbolzen (27) festgelegten ersten Anschlag (26,43) andrückt, und an dem Ankerbolzen (27) ein zweiter Anschlag (41) angeordnet ist und spätestens in der Schließstellung des Magnetventils beim Anschlagen des Steuerventilgliedes (25) am Ventilsitz (24) eine aus der Trägheit seiner Masse resultierende, entgegen der Spannkraft der Rückholfeder (35) gerichtete Verschiebung des gleitend verschiebbaren Teils (50) auf dem Ankerbolzen (27) ein Anstoßen des gleitend verschiebbaren Teils (50) gegen den zweiten Anschlag (41) des Ankerbolzens (27) bewirkt, wodurch ein Nachschwingen und/oder Abprellen des Steuerventilgliedes (25) vom Ventilsitz (24) verminderbar ist, **dadurch gekennzeichnet, dass** die Masse des gleitend verschiebbaren Teils (50) im Rahmen von Fertigungstoleranzen der Masse des aus Ankerplatte (28) und Ankerbolzen (27) gebildeten Ankers entspricht.

2. Magnetventil nach Anspruch 1, **dadurch gekennzeichnet, dass** der zweite Anschlag (41) durch eine dem gleitend verschiebbaren Teil (50) zugewandte ringförmige Fläche einer mit dem Ankerbolzen (27) fest verbundenen hohlzylinderförmigen Hülse (40) gebildet wird.

3. Magnetventil nach Anspruch 1, **dadurch gekennzeichnet, dass** der erste Anschlag (51) durch eine zwischen der Ankerplatte (28) und dem zweiten Anschlag (41) an dem Ankerbolzen (27) ausgebildete Ringschulter gebildet wird.

4. Magnetventil nach Anspruch 1, **dadurch gekennzeichnet, dass** das gleitend verschiebbare Teil (50) einen mit dem Ankerbolzen (27) verbundenen hülsenförmigen Grundkörper aufweist, der an seinem dem ersten Anschlag (51) zugewandten Ende einen Flansch (52) aufweist, an dem sich die Rückholfeder (35) abstützt.

5. Magnetventil nach einem der Ansprüche 1 bis 4, **dadurch gekennzeichnet, dass** der Ankerbolzen (27) einstückig mit der Ankerplatte (28) ausgebildet ist.

6. Verwendung eines Magnetventils nach einem der Ansprüche 1 bis 5 in einem Einspritzventil einer Brennkraftmaschine.

## Claims

1. Magnetic valve for controlling an injection valve of an internal combustion engine, which magnetic valve has a housing part (60), an electromagnet (29), a movable armature with armature plate (28) and armature pin (27), a control valve element (25), moved with the armature, acted on in the closing direction by a closing spring (31) and interacting with a valve seat (24), for opening and closing a fuel discharge channel (17) of a control pressure chamber (14) of the injection valve (1) and a part (28, 50) which, under the action of its inertial mass, can be displaced in a sliding manner on the armature pin (27) in the closing direction of the control valve element (25), counter to the stress of a return spring (35), the return spring (35) being arranged with a first end in a fixed location on the housing part (60) and with the other end pressing the part that can be displaced in a sliding manner, counter to the closing direction of the control valve element (25), against a first stop (26, 43) which is fixed to the armature pin (27), and a second stop (41) being arranged on the armature pin (27) and, at the latest in the closed position of the magnetic valve, when the control valve element (25) strikes the valve seat (24), a displacement oriented counter to the stress of the return spring (35) of the part (50) that can be displaced in a sliding manner on the armature pin (27) causing the part (50) that can be displaced in a sliding manner to strike the second stop (41) of the armature pin (27), by which means post-pulse oscillation and/or bouncing of the control valve element (25) off the valve seat (24) can be reduced, **characterized in that**, within the context of fabrication tolerances, the mass of the part (50) that can be displaced in a sliding manner corresponds to the mass of the armature formed by the armature plate (28) and armature pin (27).

2. Magnetic valve according to Claim 1, **characterized in that** the second stop (41) is formed by an annular face, facing the part (50) that can be displaced in a sliding manner, of a hollow cylindrical sleeve (40) that is firmly connected to the armature pin (27).

3. Magnetic valve according to Claim 1, **characterized in that** the first stop (51) is formed by an annular shoulder formed on the armature pin (27), between the armature plate (28) and the second stop (41).

4. Magnetic valve according to Claim 1, **characterized in that** the part (50) that can be displaced in a sliding manner has a sleeve-like basic body which is connected to the armature pin (27) and which, at its end facing the first stop (51), has a flange (52) on which the return spring (35) is supported.

5. Magnetic valve according to one of Claims 1 to 4, **characterized in that** the armature pin (27) is formed in one piece with the armature plate (28).

6. Use of a magnetic valve according to one of Claims 1 to 5 in an injection valve of an internal combustion engine.

## Revendications

1. Electrovanne pour commander un injecteur d'un moteur à combustion interne qui présente une partie de boîtier (60), un électroaimant (29), un induit mobile avec plaque d'induit (28) et boulon d'induit (27), un organe de soupape de commande (25) déplacé avec l'induit chargé par un ressort de fermeture (31) dans la direction de fermeture coopérant avec un siège de soupape (24) pour ouvrir et fermer un canal d'écoulement de carburant (17) d'une chambre de pression de commande (14) de l'injecteur (1), et un élément (28, 50) coulissant sur le boulon d'induit (27) dans la direction de fermeture de l'organe de soupape de commande (25) contre la force de serrage d'un ressort de rappel (35) sous l'effet de sa masse inerte,
dans laquelle le ressort de rappel (35) est disposé de façon fixe sur la partie de boîtier (60) par une première extrémité et par l'autre extrémité presse l'élément coulissant à l'opposé de la direction de fermeture de l'organe de soupape de commande (25) contre une première butée (26, 43) fixée sur le boulon d'induit (27), et sur le boulon d'induit (27) une deuxième butée (41) est disposée et au plus tard dans la position de fermeture de l'électrovanne, lorsque l'organe de soupape de commande (25) bute contre le siège de soupape (24), un déplacement de l'élément coulissant (50) sur le boulon d'induit (27) provoque un choc de l'élément coulissant (50), résultant de l'inertie de sa masse, dirigé à l'opposé de la force de serrage du ressort de rappel (35), contre la deuxième butée (41) du boulon d'induit (27), moyennant quoi une postoscillation et/ou un rebondissement de l'organe de soupape de commande (25) du siège de soupape (24) pouvent être réduits,
**caractérisée en ce que**
la masse de l'élément coulissant (50) correspond à peu près à la masse de l'induit composé de la plaque d'induit (28) et du boulon d'induit (27).

2. Electrovanne selon la revendication 1,
**caractérisée en ce que**
la deuxième butée (41) est formée par une surface annulaire tournée vers l'élément coulissant (50) d'une douille cylindrique creuse (40) solidaire du boulon d'induit (27).

3. Electrovanne selon la revendication 1,
**caractérisée en ce que**
la première butée (51) est formée par un épaulement annulaire formé entre la plaque d'induit (28) et la deuxième butée (41) sur le boulon d'induit (27).

4. Electrovanne selon la revendication 1,
**caractérisée en ce que**
l'élément coulissant (50) présente un corps de base en forme de douille relié au boulon d'induit (27), qui, à son extrémité tournée vers la première butée (51), présente une bride (52) sur laquelle s'appuie le ressort de rappel (35).

5. Electrovanne selon l'une quelconque des revendications 1 à 4,
**caractérisée en ce que**
le boulon d'induit (27) est formé d'un seul tenant avec la plaque d'induit (28).

6. Utilisation d'une électrovanne selon l'une quelconque des revendications 1 à 5 dans un injecteur d'un moteur à combustion interne.
